# EUROPEAN PATENT APPLICATION

(11) **EP 1 174 318 A1**
(43) Date of publication of application: **23.01.2002**
(21) Application number: 00202618.5
(22) Date of filing: 20.07.2000
(51) Int. Cl.: B60T 7/08

(54) **Covering for a parking brake**

(71) Applicant: Breed Automotive Technology, Inc., Lakeland, Florida 33811 (US)
(72) Inventor: Vian, Paolo, 37039 Tregnago, Verona (IT)
(74) Representative: Mittler, Enrico

(57) **Abstract**

The present invention concerns a covering for a parking brake that comprises a tubular handle body (3) that is arranged coaxial to the lever (5) of the parking brake and is fixable to it by means of fastening dowels (6) that are positioned at a back end, a finishing back ring nut (4, 54) inserted onto said back end, of the handle body (3), an adapter (2) with an external shape and size equal to the internal ones of said handle body (3) and internal hole (17) with a shape and size varying with the external shape and size of the brake lever (5), and a fore finishing ring nut (1) inserted onto said adapter (2).

## Description

The present invention relates to a covering for a parking brake, particularly for motorcars.

It is felt by motorists the need to elaborate functional and not functional parts of their own motorcars in order to make them to correspond in a more adequate way to needs of technical and aesthetic nature.

Aesthetics of a motorcar is so important for a motorist that the elaboration operations do not involve the external part of the same motorcar only, but also the internal trim, as for instance upholstery, steering wheels, gear shift knobs and hand brake levers, etc.

The firms that manufacture motorcar accessories, as they perceive this demand, design and market components that are capable to satisfy the most disparate market demands.

One of such demands is the covering of the parking brake lever or hand brake lever with a material whose execution and quality are better than what supplied by the motorcar manufacturer.

For the covering of a parking brake there are known structures comprising a tube with round or rectangular section that is externally coated with elements made of polyurethane that are inserted or moulded together with it.

The limit of the known technique resides in the fact of having to provide for a specific covering for each type of parking brake. There is no possibility to standardise the elements making up the covering structure or to modify the external coating.

There are also some coverings that are made up of a cylindrical tube having a back fastening ring nut and a fore finishing ring nut. In this case the fore end of the tube does not have a stable position on the brake lever.

In view of the state of the art herein described, an object of the present invention is to provide a covering for a parking brake that is universally adaptable and that has aesthetical characteristics that meet the demands of motorists.

According to the present invention, this object is achieved by means of a covering for a parking brake characterized in that it comprises a tubular handle body that is arranged coaxial to the parking brake lever and can be fixed to it by means of fastening dowels that are placed at a back end thereof, a finishing back ring nut inserted onto said back end of the handle body, an adapter with external shape and size equal to the internal ones of said handle body and an internal hole with a shape and size variable with the external shape and size of the brake lever, and a fore finishing ring nut inserted onto said adapter.

The back ring nut can be made in such a way so as to hide the fastening dowels or it can function as a support for a flexible finishing cap that is in turn placed around the fastening dowels.

In accordance with the present invention it is thus possible to provide a covering that is couplable in a stable and secure way to any type of parking brake.

The characteristics and the advantages of the present invention will become evident from the following detailed description of an embodiment thereof, that is illustrated as a non limiting example in the enclosed drawings, in which:
Figure 1 is an exploded perspective view of a covering for a parking brake according to the present invention;
Figure 2 is a longitudinal section of a covering according to the present invention as mounted onto the lever of a parking brake;
Figure 3 is a perspective view of a tubular handle body comprised in the parking brake covering of Figures 1 and 2;
Figure 4 is a side view of the handle body of Figure 3;
Figure 5 is a side view of an adapter comprised in the covering of Figures 1 and 2;
Figure 6 is a top plan view of the adapter of Figure 5;
Figure 7 is a perspective view of a variation of the back ring nut comprised in the covering of Figures 1 and 2;
Figure 8 is an axial section of the back ring nut of Figure 7; and
Figure 9 is a longitudinal section view similar to the one in Figure 2, that shows a covering with modified back ring nut as in Figures 7 and 8, as mounted onto the parking brake lever.

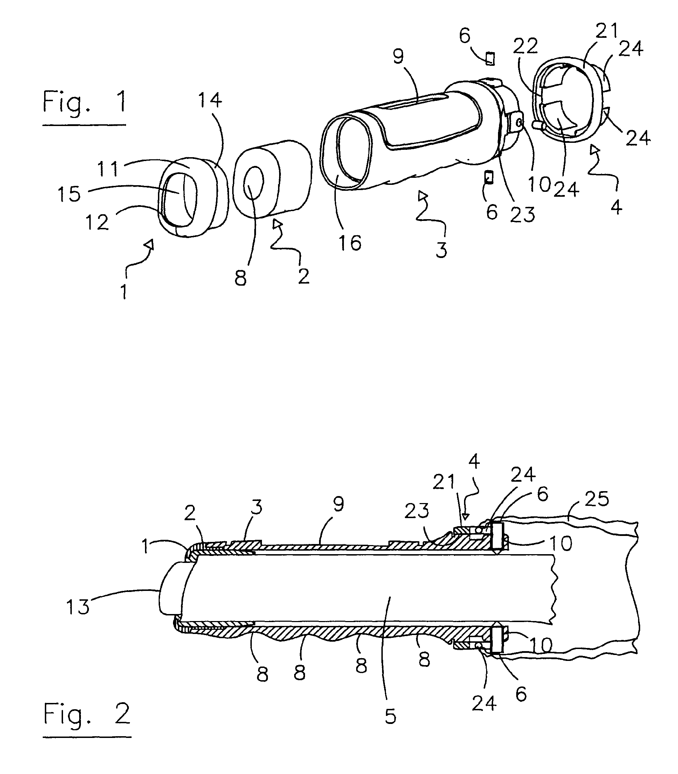

In Figure 1 there is shown an exploded view of a covering for a parking brake according to the present invention, that comprises a fore ring nut 1 of the pressure type, an adapter 2 made of deformable material, for example of rubber, a tubular handle body 3 with a finish made of a special decorative material as leather or wood, and a back finishing ring nut 4.

The hollow handle body 3 has a substantially square cross section with rounded comers, that make it utilisable for any type and shape of lever 5 for a parking brake, to which it is fastened by means of fastening dowels 6, as shown in Figure 2.

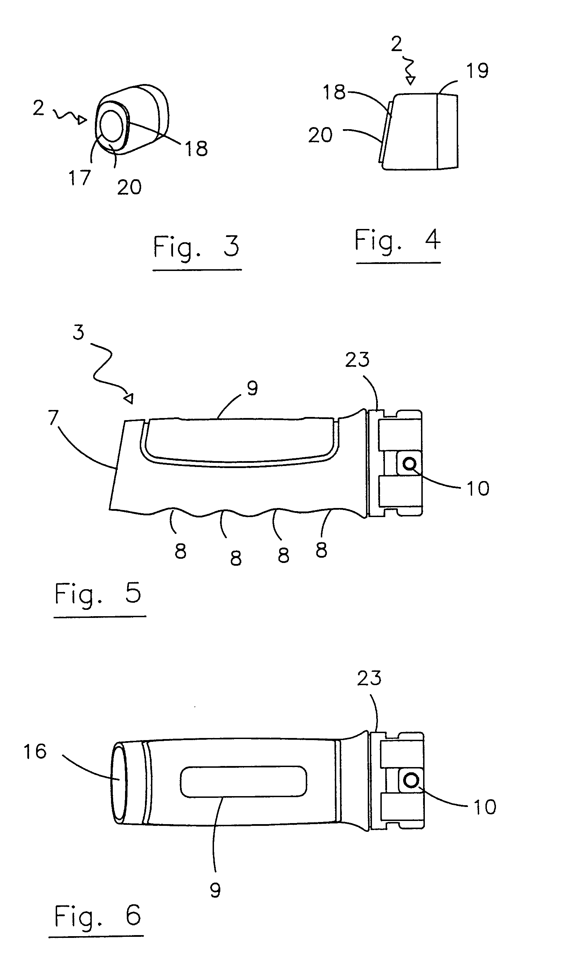

As shown in greater details in Figures 5 and 6, the handle body 3 has an open end 7 that is tilted clockwise by about 70° with respect to a longitudinal axis so as to make the insertion of the adapter 2 and of the fore ring nut 1 easy.

In the lower part of the handle body 3 (Figure 5) there are provided four external notches or ondulations 8, preferably having radii different from each other, that allow a tight grip of the handle body 3 by a driver's hand.

The upper part of the handle body 3 can be coated with various types of materials such as carbon, kevlar, etc., or it can be painted or printed or embossed, as well as aluminum with various surface treatments can be used.

On the upper surface of the handle body 3 a hollow zone 9 is provided that operates as a housing for a decorative plate. This plate can be made of various materials such as aluminum, wood or precious materials. The plate can also be the housing for a three-dimensional serigraphy so as to meet the most varied tastes of motorists.

In the back terminal part some holes 10 can be observed that are sized to receive the fastening dowels 6.

The fore ring nut 1 has a fore part 11 with a longitudinal hole 12 with a shape and size such as to allow the passage of a release button 13 of the parking brake, shown in Figure 2, and a back part 14 with a longitudinal hole 15 having a shape and size such as to allow the pressure insertion of the ring nut 1 on the adapter 2.

The adapter 2, shown in greater detail in Figures 3 and 4, has in turn an external shape and size complementary to and matable with the internal hole 16 of the handle body 3 and an internal hole 17 with a shape and size varying with the external shape and size of the lever 5 of the parking brake. In addition the adapter has a projection 18 having a predetermined thickness such as to allow a perfect copying of the inside profile of the ring nut 1.

From Figure 4 it is also possible to note that the adapter 2 has a tapered profile 19 in its back part so as to facilitate the insertion of the handle body 3. It is also possible to note that the adapter 2 has a mouth 20 that is tilted clockwise by about 70° with respect to a longitudinal axis, as also the inlet of the ring nut 1.

The back ring nut 4 provides in turn a fore ring 21 with a hole 22 having an inside shape and size such as to be able to be inserted onto a back flange 23 of the handle body 3 (Figure 2) and four back axial protuberances 24 that are circumferencially spaced from each other and, with the ring nut 4 mounted thereon, positioned between one and the other of the holes 10 destined to receive the fastening dowels 6.

The assembly of the covering 1-4 on the lever 5 of the parking brake provides, in the order, for the removal of the material (generally polyurethane) that covers the same lever, the insertion of the usual cap or boot 25 of leather or a similar material that covers the articulation of the lever 5, the insertion of the back ring nut 4, the insertion of the handle body 3, the insertion of a specific adapter 2, the insertion of the fore ring nut 1, the positioning and general fastening by means of the dowels 6 and finally the positioning of the cap 25 on the back ring nut 4.

A covering is thus realised that through an opportune choice of the adapter 2 becomes adaptable to any parking brake, as well as firmly positioned on the same.

In addition a covering is obtained that is aesthetically pleasant, and realisable with special materials of any kind.

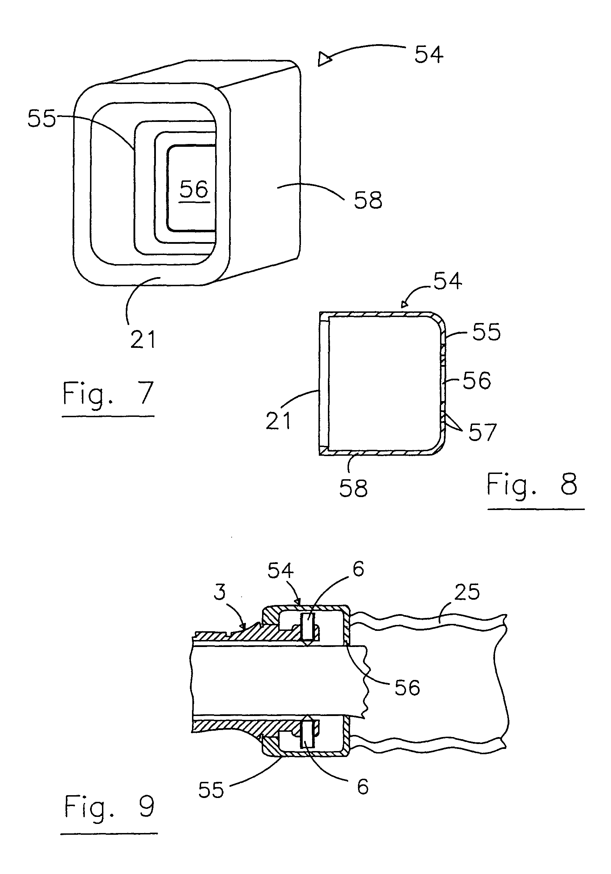

Figures 7 and 8 show a variation of the finishing back ring nut, herein indicated by the number 54.

As it can be seen, the ring nut 54 has a side wall 58 that continues on the back of the ring 21 and, instead of the axial projections 25, a back wall 55 is pierced by a hole 56 whose size can be varied as a function of the size of the lever 5 taking advantage of the fracture lines 57 preformed in the back same wall.

The ring nut 54 is thus destined to cover the fastening dowels 6, as shown in figure 9. The cap or boot 25 is limited to cover the remaining back part of the lever 5.

## Claims

1. Covering for a parking brake **characterized in that** it comprises a tubular handle body (3) that is arranged coaxial to the parking brake lever (5) and is fixable to it by means of fastening dowels (6) that are positioned at a back end thereof, a finishing back ring nut (4, 54) inserted onto said back end of the handle body (3), an adapter (2) with an external shape and size equal to the internal ones of said handle body (3) and an internal hole (17) with a shape and size varying with the external shape and size of the lever (5) of the brake, and a fore finishing ring nut (1) inserted onto said adapter (2).

2. Covering for a parking brake according to claim 1, **characterized in that** said adapter (2) is made of deformable material.

3. Covering for a parking brake according to claim 2, **characterized in that** said deformable material is rubber.

4. Covering for a parking brake according to claim 1, **characterized in that** said handle body (3) has a cavity (9) for the housing of an ornamental plate.

5. Covering for a parking brake according to claim 1, **characterized in that** said back ring nut (4, 54) is made up of a ring (21) inserted onto a back flange (23) of said handle body (3) and of a plurality of axial back projections (24) that are positioned between one and the other of the fastening dowels (6) of the handle body (3) and onto which a cap (25) for covering the back part of the of the parking brake lever (5) can be inserted.

6. Covering for a parking brake according to claim 1, **characterized in that** said back ring nut (4, 54) is made up of a ring (21) inserted onto a back flange (23) of said handle body (3), of a side wall (58) that continues on the back of said ring (21) and of a back wall (55) that is pierced by a hole (56) whose size can be varied as a function of the size of the lever (5) of the parking brake, taking advantage of fracture lines (57) that are preformed in said back wall (55).
